# EUROPÄISCHE PATENTSCHRIFT

(11) **EP 1 952 050 B1**
(45) Veröffentlichungstag und Bekanntmachung des Hinweises auf die Patenterteilung: **01.09.2010**
(21) Anmeldenummer: 06792160.1
(22) Anmeldetag: 20.09.2006
(51) Int. Cl.: F16L 37/12, F16L 37/14

(54) **SCHNELLKÜPPLUNG FÜR ROHRE**
QUICK-ACTION COUPLING FOR PIPES
RACCORD RAPIDE POUR TUYAUX

(30) Priorität: 18.11.2005 DE 102005055549
(43) Veröffentlichungstag der Anmeldung: 06.08.2008
(73) Patentinhaber: A. RAYMOND ET CIE, 38000 Grenoble (FR)
(72) Erfinder: TREDE, Michael, F-68440 Habsheim (FR); FEGER, Axel, 79540 Lörrach (DE)
(74) Vertreter: Rüttgers, Joachim
(86) Internationale Anmeldenummer: PCT/EP2006/009118
(87) Internationale Veröffentlichungsnummer: WO 2007/057068

(56) Entgegenhaltungen:
- WO-A-02/052188
- DE-B3-102004 062 887
- US-A1- 2003 218 335

## Beschreibung

Die Erfindung betrifft eine Kupplung gemäß dem Oberbegriff des Patentanspruches 1.

Eine derartige Kupplung ist aus DE 10 2004 062 887 B3 bekannt. Die vorbekannte Kupplung verfügt über ein Aufnahmeteil, in das ein mit einem radial überstehenden Rückhaltering ausgebildetes Einsteckteil einfügbar ist. Weiterhin ist ein Sicherungsteil vorhanden, das nach Einfügen des Einsteckteiles bis in eine Kuppelstellung von einer ansonsten radial nach innen bewegungsblockierten vorstehenden Vormontagestellung in eine radial nach außen bewegungsbtockierte eingeschobene Sicherungsstellung bewegbar ist. Das Sicherungsteil verfügt über axial bewegbare Verriegelungsarme, die im Zusammenwirken mit Verriegelungsvorsprüngen das Einnehmen der bewegungsblockierten Vormontagestellung und bewegungsblockierten Sicherungsstellung gestatten. Dadurch ist eine relativ einfache konstruktive Beeinflussung der Montagekraft, eine hohe Verschließfestigkeit und eine einfache sowie betriebssichere Handhabung bei Lösen der Verbindung zwischen dem Aufnahmeteil und dem Einsteckteil insbesondere unter beengten Platzverhältnissen erzielt.

Der Erfindung liegt die Aufgabe zugrunde, eine Kupplung der eingangs genannten Art anzugeben, bei der in einfacher Art und Weise das ordnungsgemäße Überführen des Sicherungsteiles von der vorstehenden Vormontagestellung in die eingeschobene Sicherungsstellung zum ordnungsgemäßen Verbinden des Einsteckteiles und des Aufnahmeteiles kontrollierbar ist.

Diese Aufgabe wird bei einer Kopplung der eingangs genannten Art erfindungsgemäß mit den kennzeichnenden Merkmalen des Patentanspruches 1 gelöst.

Dadurch, dass bei der erfindungsgemäßen Kupplung ein Kontrollteil vorhanden ist, das nur dann durch Verschieben in axialer Richtung von dem Aufnahmeteil abnehmbar ist, wenn sich das Sicherungsteil ordnungsgemäß in der eingeschobenen Sicherungsstellung befindet, ist eine einfache Kontrolle dadurch geschaffen, dass beispielsweise bei einer Fließbandmontage ein mit dem Verbinden des Aufnahmeteiles und des Einsteckteiles beauftragter Werker durch Abzählen der abgenommenen Kontrollteile und Vergleich der Anzahl der Kontrollteile mit der Anzahl der verbauten Kupplungen sicherstellen kann, dass bei allen verbauten Kupplungen eine ordnungsgemäße Fluidverbindung hergestellt ist.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbei- spiel einer erfindungsgemäßen Kupplung mit einem in einer vorstehenden Vormontagestellung angeordneten Sicherungsteil sowie einem Kontrollteil in Anschlagsstel- lung,
- Fig. 2: in einer perspektivischen Ansicht das Ausführungsbei- spiel gemäß Fig. 1 mit dem Sicherungsteil in einer ein- geschobenen Sicherungsstellung sowie einem in ein Aufnahmeteil eingefügten Einsteckteil,
- Fig. 3: in einer perspektivischen Ansicht das Ausführungsbei- spiel gemäß Fig. 1 und Fig. 2 mit einem gegenüber der Anschlagsstellung gemäß Fig. 1 in axialer Richtung ver- schobenen Kontrollteil und
- Fig. 4: in einer perspektivischen Ansicht das Ausführungsbei- spiel gemäß Fig. 1 bis Fig. 3 mit dem Kontrollteil in einer abgenommenen Anordnung.

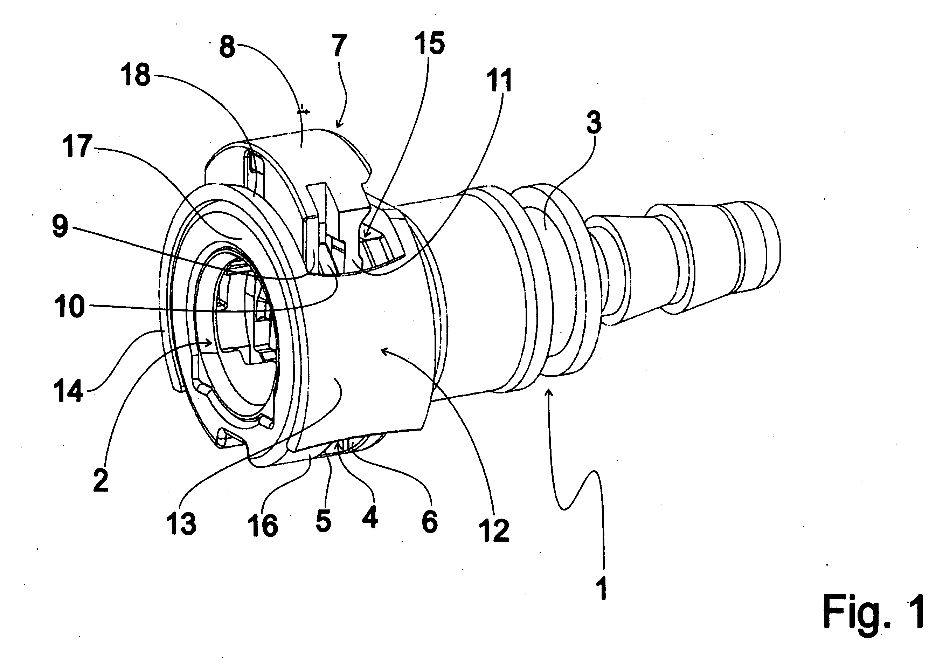

Fig. 1 zeigt in einer perspektivischen Ansicht ein Ausführungsbeispiel einer erfindungsgemäßen Kupplung. Die Kupplung gemäß Fig. 1 verfügt über ein aus einem harten Kunststoffmaterial hergestelltes Aufnahmeteil 1, das mit einem in Fig. 1 nicht dargestellten Ende einer Leitung eines Fluidleitungssystems verbindbar ist. An dem Aufnahmeteil 1 sind in einem einer Einsteckseite 2 benachbarten, im Querschnitt vergrößerten Bereich beidseitig eines länglichen Aufnahmekörpers 3 Verriegelungsarmaufnahmen 4 ausgebildet, die sich rechtwinklig zur axialen Richtung des Aufnahmekörpers 3 erstrecken. An den der Einsteckseite 2 zugewandten Vorderwänden 5 ist als ein Sperrelement jeweils ein in der Darstellung gemäß Fig. 1 nicht sichtbarer Verriegelungsvorsprung angeordnet, der in axialer Richtung von der jeweiligen Vorderwand 5 absteht und sich in Richtung einer der Vorderwand 5 gegenüberliegenden Rückwand 6 erstreckt, wobei zwischen dem von der Einsteckseite 2 wegweisenden freien Ende des jeweiligen Verriegelungsvorsprunges und der betreffenden Rückwand 6 ein Freiraum ausgebildet ist.

Die erfindungsgemäße Kupplung verfügt weiterhin über ein ebenfalls aus einem harten Kunststoffmaterial hergestelltes Sicherungsteil 7, das mit einem Deckabschnitt 8 ausgebildet ist, an dem zwei einander gegenüberliegende Rückhaltearme 9 angeformt sind. Die Rückhaltearme 9 greifen jeweils in eine durch eine Zwischenwand 10 von den Verriegelungsarmaufnahmen 4 abgetrennten und auf der der Einsteckseite 2 zugewandten Seite der Verriegelungsarmaufnahmen 4 angeordneten Rückhaltearmaufnahmen ein.

Weiterhin verfügt das Sicherungsteil 7 bei dem dargestellten Ausführungsbeispiel über zwei Verriegelungsarme 11, die in die Verriegelungsarmaufnahmen 4 eingreifen und aufgrund der Eigenschaften des verwendeten Kunststoffmateriales und/oder einer entsprechenden Dimensionierung in den Abmessungen in der axialen Richtung biegsam sind. Vorzugsweise sind die Verriegelungsarme 11 zu der Einsteckseite 2 vorgespannt und liegen in der Darstellung gemäß Fig. 1 daher wenigstens im Bereich ihrer freien Enden mit ihren der Einsteckseite 2 zugewandten Flachseiten an den Vorderwänden 5 der Verriegelungsarmaufnahmen 4 an.

In der Anordnung des Aufnahmeteiles 1 und des Sicherungsteiles 7 gemäß Fig. 1, in der das Sicherungsteil 7 in einer vorstehenden Vormontagestellung ist, liegen die als weitere Sperrelemente der Sperranordnung wirkenden Stirnseiten der freien Enden der Verriegelungsarme 11 an den ihnen zugewandten Wandseiten der Verriegelungsvorsprünge an, wobei das Sicherungsteil 7 durch die bevorzugte Vorspannung der Verriegelungsarme 11 in Richtung der Einsteckseite 2 somit in dieser über den Aufnahmekörper 3 vorstehenden Vormontagestellung gegen ein Verschieben in eine eingeschobene Sicherungsstellung radial nach innen bewegungsblockiert ist.

Im Bereich des freien Endes jedes Verriegelungsarmes 11 ist weiterhin jeweils eine radial nach innen geöffnete Verriegelungsausnehmung ausgebildet, deren Gestalt komplementär zu der Form des jeweiligen Verriegelungsvorsprunges ist.

Bei der erfindungsgemäßen Kupplung ist weiterhin ein Kontrollteil 12 vorhanden, das über einen mit Seitenschenkeln 13, 14 und einer Sicherungsteilausnehmung 15 ausgebildeten C-förmigen Grundkörper verfügt. In der Anordnung gemäß Fig. 1 umschließt das Kontrollteil 12 in der Vormontagestellung des Sicherungsteiles 7 einen Kopfabschnitt 16, in dem auch das Sicherungsteil 7 gelagert ist, wobei das Sicherungsteil 7 durch die Sicherungsteilausnehmung 15 durchgreift. Das Kontrollteil 12 weist einen Anschlagabschnitt auf, der bei dem erläuterten Ausführungsbeispiel durch einen sich zwischen den Seitenschenkeln 13, 14 kreisbogenförmig erstreckenden und an einem der Einführseite 2 zugewandten Abschlussbund 17 des Kopfabschnittes 15 anliegenden Verbindungssteg 18 gebildet ist. In der Anordnung gemäß Fig. 1 liegt der Verbindungssteg 18 in der vorstehenden Vormontagestellung des Sicherungsteiles 7 direkt an der der Einführseite 2 zugewandten Wand des Sicherungsteiles 7 an.

Bei einer nicht dargestellten Abwandlung einer erfindungsgemäßen Kupplung ist zwischen einem Anschlagabschnitt und dem Sicherungsteil 7 ein gewisser Abstand vorhanden.

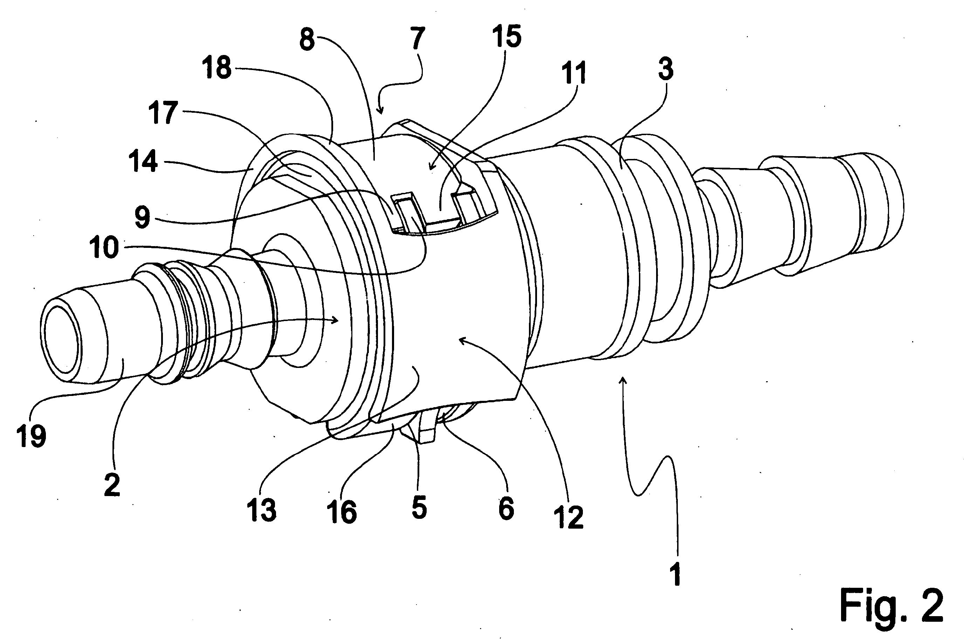

Fig. 2 zeigt in einer perspektivischen Ansicht das Aufnahmeteil 1 und das Sicherungsteil 7 des erläuterten Ausführungsbeispieles einer erfindungsgemäßen Kupplung in der Anordnung gemäß Fig. 1 mit einem mit einem Einsteckschaft in einen von dem Aufnahmekörper 3 umschlossenen Aufnahmeraum eingefügten Einsteckteil 19. Der Einsteckschaft ist über eine Dichtanordnung abgedichtet. Das Einsteckteil 19 ist weiterhin mit einem gegenüber dem Einsteckschaft im Durchmesser vergrößerten Rückhaltering sowie zum Anschluss an das Fluidleitungssystem mit einem auf der dem Einsteckschaft gegenüberliegenden Seite des Rückhalteringes ausgebildeten Verbindungsschaft ausgebildet.

In der Anordnung gemäß Fig. 2 ist das Einsteckteil 19 für eine korrekte Verbindung mit dem Aufnahmeteil 1 ordnungsgemäß bis in eine Koppelstellung ausreichend tief in den Aufnahmeraum eingefügt, wobei erst in dieser Anordnung der ein Überführen des Sicherungsteiles 7 von der ausgefahrenen Vormontagestellung gemäß Fig.1 in die in Fig. 2 dargestellte eingeschobene Sicherungsstellung behindernde Eingriff der Stirnseiten der freien Enden der Verriegelungsarme 11 mit den Verriegelungsvorsprüngen unter Bewegen der Verriegelungsarme 11 entgegen der Vorspannung in axialer Richtung von der Einsteckseite 3 weg gelöst ist.

Die eingeschobene Sicherungsstellung wurde ausgehend von der in Fig. 1 dargestellten vorstehenden Vormontagestellung eingenommen, indem sich durch Ausüben einer entsprechenden Kraft auf den Deckabschnitt 8 die Verriegelungsarme 11 durch die Freiräume hindurch so weit bewegt haben, bis aufgrund der Vorspannung der Verriegelungsarme 11 die Verriegelungsausnehmungen mit den Verriegelungsvorsprüngen in Eingriff gekommen sind und das Sicherungsteil 7 in dieser eingeschobenen Sicherungsstellung radial nach außen bewegungsblockiert fixieren. In der eingeschobenen Sicherungsstellung hintergreifen die Rückhaltearme 9 den Rückhaltering und sichern somit das Einsteckteil 19 in dem Aufnahmeteil 1. Zum Vermeiden eines zu großen Spieles bei dieser Bewegung sind die Freiräume zweckmäßigerweise in ihren Abmessungen in axialer Richtung nur geringfügig größer als die Dicke der Verriegelungsarme 11 ausgebildet.

Falls hingegen das Sicherungsteil 7 aus der vorstehenden Vormontagestellung gemäß Fig. 1 nicht in die eingeschobene Sicherungsstellung gemäß Fig. 2 bis Fig. 4 überführt wird, erfolgt durch die nunmehr relativ hohe Vorspannung der Verriegelungsarme 11 ein Austreiben des Einsteckteiles 19 entgegen der Einführrichtung in Richtung der Einsteckseite 2. Dadurch ist eine hohe Montagesicherheit gegeben.

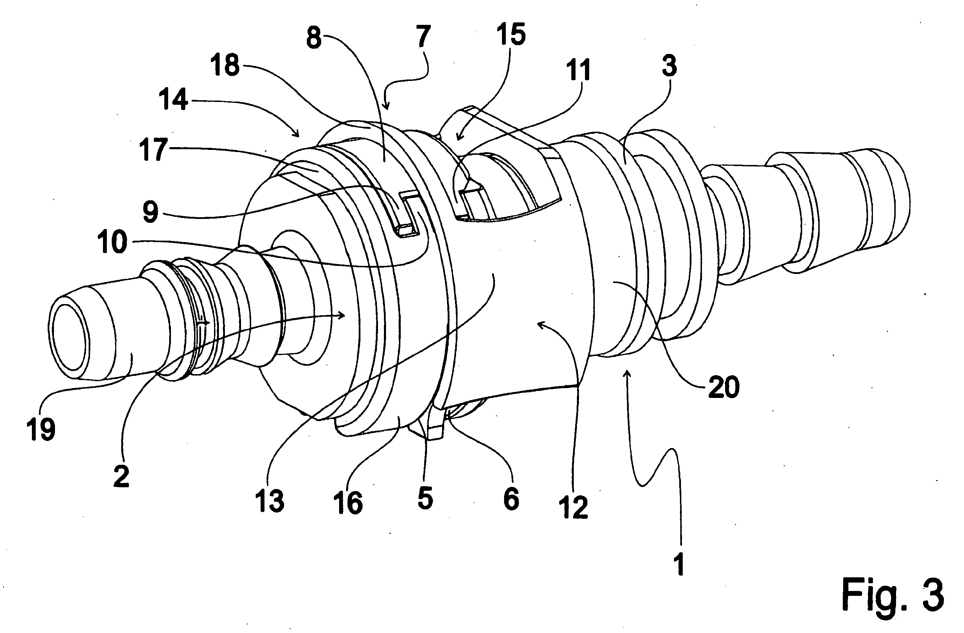

Fig. 3 zeigt in einer perspektivischen Ansicht das Ausführungsbeispiel gemäß Fig. 1 und Fig. 2 mit dem Sicherungsteil in der eingeschobenen Sicherungsstellung. Aus Fig. 3 ist ersichtlich, dass bei dem erläuterten Ausführungsbeispiel die Außenseite des Deckabschnittes 8 bündig mit dem Abschlussbund 17 angeordnet ist, so dass der Verbindungssteg 18 nunmehr freiliegt und, wie in Fig. 3 dargestellt, das Kontrollteil 12 von der Einführseite 2 weg in Richtung eines in Einführrichtung des Einsteckteiles 17 hinter dem Kopfabschnitt 16 angeordneten Mittenabschnitt 20 verschiebbar ist.

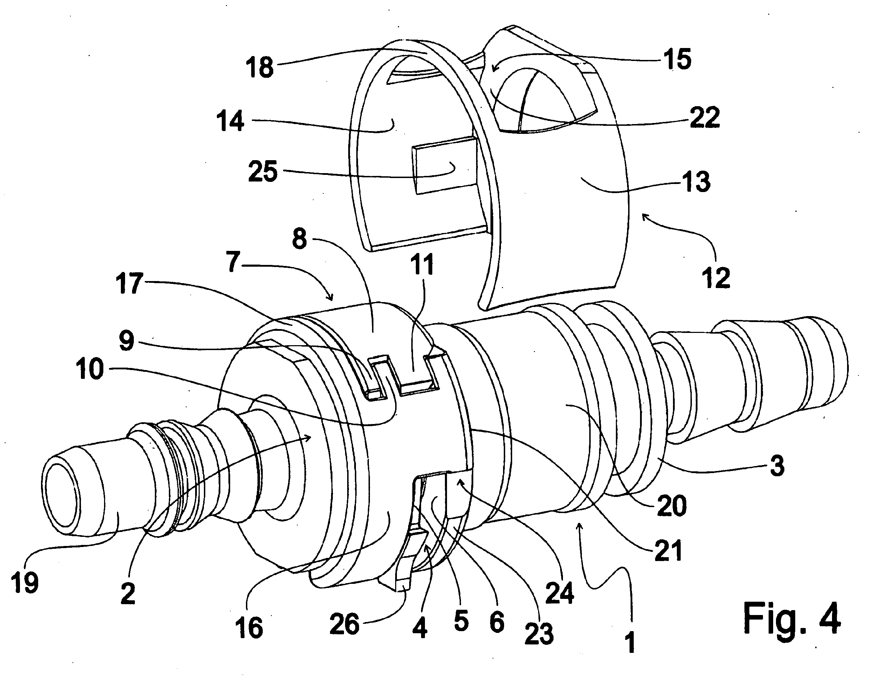

Fig. 4 zeigt das Ausführungsbeispiel gemäß Fig. 1 bis Fig. 3 mit dem von dem Aufnahmekörper 3 abgenommenen Kontrollteil 12, nachdem das Kontrollteil 12 bis über den Mittenabschnitt 20 geschoben worden ist. Aus Fig. 4 ist deutlich ersichtlich, dass der Mittenabschnitt 20 eine gegenüber dem Durchmesser des Kopfabschnittes 16 kleineren Durchmesser aufweist, wobei zwischen dem Kopfabschnitt 16 und dem Mittenabschnitt 20 eine radial ausgerichtete Stufenwand 21 ausgebildet ist. Weiterhin lässt sich Fig. 4 entnehmen, dass das Kontrollteil 12 auf seiner dem Verbindungssteg 18 gegenüberliegenden Seite eine radial nach innen ragende Rückwand 22 aufweist, die so ausgebildet ist, dass ihre radial nach innen weisende Stirnseite an einem der Stufenwand 21 benachbarten, gegenüber den übrigen Bereichen des Mittenabschnittes 20 geringfügig verdickten Randabschnitt des Mittenabschnittes 20 anliegt. Dadurch ist das Kontrollteil 12 zum einen gegen Aufbiegen verstärkt, und zum anderen ist das Kontrollteil 12 in der Anschlagsstellung spielfrei an dem Aufnahmekörper 3 gehalten, während es nach Überführen in eine mit dem Kopfabschnitt 16 eingriffsfreie Entnahmestellung, in der es im Bereich des Mittenabschnittes 20 angeordnet ist, verhältnismäßig einfach von dem Aufnahmekörper 3 abnehmbar ist.

Weiterhin lässt sich Fig. 4 entnehmen, dass zum Verhindern, dass das Kontrollteil 12 durch eine Drehbewegung unbeabsichtigt in der Anschlagsstellung gemäß Fig. 1 von dem Aufnahmekörper 3 abgenommen werden kann, in einem in benachbart der Stufenwand 21 gelegenen Kopfbund 23 des Kopfabschnittes 15 sich in axialer Richtung erstreckende und zum Mittenabschnitt 20 offene Rastnuten 24 eingebracht und an den Innenseiten der Seitenschenkel 13, 14 komplementär zu den Rastnuten 24 ausgebildete Rastvorsprünge 25 ausgebildet sind.

Zweckmäßigerweise stehen die freien Enden 26 der Verriegelungsarme 11 geringfügig über den gegenüber dem Aufnahmekörper 3 im Durchmesser vergrößerten Bereich des Aufnahmeteiles 1 über, so dass bei Ausüben einer Kraft auf die überstehenden Endabschnitte der Verriegelungsarme 11 in axialer Richtung von der Einsteckseite 2 weg entgegen der Vorspannung der Verriegelungsarme 11 der Eingriff zwischen den Verriegelungsvorsprüngen und den Verriegelungsausnehmung gelöst wird und durch Ausüben einer zu dieser Entriegelungskraft rechtwinklig ausgerichteten weiteren Kraft in Richtung des Deckabschnittes 9 das Sicherungsteil 7 von der eingeschobenen Sicherungsstellung in die vorstehende Vormontagestellung überführbar ist, in der das Einsteckteil 19 wieder aus dem Aufnahmeteil 1 herausziehbar ist.

Durch dieses Erfordernis einer zweifachen, in ihrer zeitlichen Abfolge separierten Kraftausübung in verschiedenen Richtungen ist somit eine sehr betriebssichere Verbindung zwischen dem Aufnahmeteil 1 und dem Einsteckteil 19 geschaffen, bei der ein unabsichtliches Lösen so gut wie ausgeschlossen ist.

## Patentansprüche

1. Kupplung mit einem Aufnahmeteil (1), in das ein mit einem radial überstehenden Rückhaltering ausgebildetes Einsteckteil (19) einfügbar ist, und mit einem Sicherungsteil (7), das nach Einfügen des Einsteckteiles (19) bis in eine Kuppelstellung von einer ansonsten in einer radial nach innen bewegungsblockierten vorstehenden Vormontagestellung in eine radial nach außen bewegungsblockierte eingeschobene Sicherungsstellung zum Festlegen des Einsteckteiles (19) durch Hintergreifen des Rückhalteringes bewegbar ist, **dadurch gekennzeichnet, dass** ein Kontrollteil (12) vorhanden ist, das einen mit Seitenschenkel (13, 14) ausgebildeten C-förmigen Grundkörper aufweist sowie in der Vormontagestellung des Sicherungsteiles (7) einen Abschnitt (16) des Aufnahmeteiles (1) umschließt und das über einen Anschlagabschnitt (18) verfügt, der in der Vormontagestellung des Sicherungsteiles (7) in einer Anschlagsstellung an dem Sicherungsteil (7) anliegt und der in der Sicherungsstellung des Sicherungsteiles (7) eingriffsfrei mit dem Sicherungsteil (7) ist, und dass das Kontrollteil (12) in der Sicherungsstellung des Sicherungsteiles (7) in axialer Richtung von der Anschlagsstellung in eine Entnahmestellung verschiebbar ist, in der es von dem Aufnahmeteil (1) abnehmbar ist.

2. Kupplung nach Anspruch 1, **dadurch gekennzeichnet, dass** der Anschlagabschnitt durch einen Verbindungssteg (18) gebildet ist, der in der Anschlagsstellung in Einführrichtung des Einsteckteiles (19) dem Sicherungsteil (7) vorgelagert angeordnet ist.

3. Kupplung nach Anspruch 2, **dadurch gekennzeichnet, dass** das Aufnahmeteil (1) einen in Einsteckrichtung des Einsteckteiles (19) vorne liegenden Kopfabschnitt sowie einen in Einsteckrichtung des Einsteckteiles (19) rückseitig des Kopfabschnittes (16) angeordneten Mittenabschnitt (20) mit einem gegenüber dem Durchmesser des Kopfabschnittes (16) kleinere Durchmesser aufweist und dass das Kontrollteil (12) in der Anschlagsstellung auf dem Kopfabschnitt (16) angeordnet ist.

4. Kupplung nach Anspruch 3, **dadurch gekennzeichnet, dass** das Kontrollteil (12) eine gegenüber den Seitenschenkeln radial nach innen ragende Rückwand (22) aufweist, die in der Anschlagsstellung des Kontrollteiles (12) an einer zwischen dem Kopfabschnitt (16) und dem Mittenabschnitt (20) ausgebildeten Stufenwand (21) anliegt.

5. Kupplung nach Anspruch 4, **dadurch gekennzeichnet, dass** der Kopfabschnitt (2) sich axial erstreckende Rastnuten (24) aufweist und dass das Kontrollteil (12) über Rastvorsprünge (25) verfügt, die in der Anschlagsstellung des Kontrollteiles (12) in die Rastnuten (24) eingreifen.

## Claims

1. Coupling comprising a receiving part (1) into which an insertion part (19) formed with a radially projecting retaining ring can be inserted, and comprising a securing part (7) which, after insertion of the insertion part (19) up to a coupling position, can be moved from a projecting preassembly position, in which movement radially inwards is otherwise blocked, to an inserted securing position, in which movement radially outwards is blocked, for fixing the insertion part (19) by gripping behind the retaining ring, **characterized in that** a control part (12) is present which has a C-shaped base body which is formed with side limbs (13, 14) and, in the preassembly position of the securing part (7), surrounds a section (16) of the receiving part (1) and which has a stop section (18) which, in the preassembly position of the securing part (7), rests against the securing part (7) in a stop position and which does not engage the securing part (7) in the securing position of the securing part (7), and **in that**, in the securing position of the securing part (7), the control part (12) can be displaced in the axial direction from the stop position to a removal position in which it can be removed from the receiving part (1).

2. Coupling according to Claim 1, **characterized in that** the stop section is formed by a connecting web (18) which, in the stop position, is arranged before the securing part (7) in the insertion direction of the insertion part (19).

3. Coupling according to Claim 2, **characterized in that** the receiving part (1) has a head section located to the front in the insertion direction of the insertion part (19) and a middle section (20) arranged at the back of the head section (16) in the insertion direction of the insertion part (19) and having a smaller diameter than the diameter of the head section (16), and **in that** the control part (12) is arranged on the head section (16) in the stop position.

4. Coupling according to Claim 3, **characterized in that** the control part (12) has a back wall (22) which projects radially inwards from the side limbs and, in the stop position of the control part (12), rests against a stepped wall (21) formed between the head section (16) and the middle section (20).

5. Coupling according to Claim 4, **characterized in that** the head section (2) has axially extending snap-in grooves (24) and **in that** the control part (12) has snap-in projections (25) which, in the stop position of the control part (12), engage the snap-in grooves (24).

## Revendications

1. Raccord comprenant un élément formant logement de réception (1), dans lequel un élément embrochable mâle (19), muni d'une bague de retenue faisant saillie dans le plan radial, est destiné à être emmanché et comprenant un élément d'immobilisation en position (7) qui, une fois l'élément embrochable mâle (19) emmanché, peut être amené dans une position d'accouplement à partir d'une position de présentation formant saillie, dans laquelle il est autrement dans l'impossibilité de pouvoir être déplacé vers l'intérieur dans le plan radial, jusque dans une position d'immobilisation en position d'insertion, dans laquelle il se trouve dans l'impossibilité d'être déplacé en direction de l'extérieur dans le plan radial, pour assurer la fixation en position de l'élément embrochable mâle (19) par l'effet de cramponnement par derrière qu'il exerce au niveau de la bague de retenue, **caractérisé en ce qu'**il est prévu un organe de pilotage (12), qui se compose d'un élément principal en forme d'arceau muni de segments latéraux (13, 14) et qui, dans la position de présentation de l'élément d'immobilisation en position (7), est, dans une position de butée, en contact d'application sur l'élément d'immobilisation en position (7) et qui, dans la position de verrouillage de l'élément d'immobilisation en position (7), n'est pas en prise d'engagement avec l'élément d'immobilisation en position (7) et **en ce que** l'organe de pilotage (12) peut, dans la position de verrouillage de l'élément d'immobilisation en position (7), être déplacé par translation dans le sens axial de sa position d'insertion en butée dans une position d'enlèvement, dans laquelle il peut être retiré de l'élément formant logement de réception.

2. Raccord selon la revendication 1, **caractérisé en ce que** la portion formant butée consiste en un pontet de liaison (18) qui, dans la position de mise en butée est, dans le sens de l'emmanchement de l'élément embrochable mâle (19), disposé en amont de l'élément d'immobilisation en position (7).

3. Raccord selon la revendication 2, **caractérisé en ce que** l'élément formant logement de réception (1) comprend une portion de tête se situant à l'avant dans le sens de l'emmanchement de l'élément embrochable mâle (19) ainsi qu'une portion médiane (20) située, dans le sens de l'emmanchement de l'élément embrochable mâle (19), derrière la portion de tête (16), dont le diamètre est plus petit comparativement au diamètre de la portion de tête (16) et **en ce que** l'organe de pilotage (12) est disposé, dans sa position de mise en butée, sur la portion de tête (16).

4. Raccord selon la revendication 3, **caractérisé en ce que** l'organe de pilotage (12) comprend une paroi arrière (22) qui fait saillie vers l'intérieur dans le plan radial par rapport aux segments latéraux, qui, dans la position de mise en butée de l'organe de pilotage (12), est en contact d'application contre une paroi en décrochement (21) qui se situe entre la portion de tête (16) et la portion médiane (20).

5. Raccord selon la revendication 4, **caractérisé en ce que** la portion formant tête (2) est munie de rainures d'accrochage par effet d'encastrement (24) s'étendant dans la plan axial et **en ce que** l'organe de pilotage (12) est pourvu de protubérances d'accrochage (25) qui, dans la position de mise en butée de l'organe de pilotage (12), viennent s'insérer en prise d'engagement dans les rainures d'accrochage (24).
